# EUROPÄISCHE PATENTSCHRIFT

(11) **EP 0 356 491 B1**
(45) Veröffentlichungstag und Bekanntmachung des Hinweises auf die Patenterteilung: **09.06.1993**
(21) Anmeldenummer: 89902506.8
(22) Anmeldetag: 17.01.1989
(51) Int. Cl.: F16K 3/24, F16K 25/00

(54) **VENTILVORRICHTUNG**
VALVE ARRANGEMENT
AGENCEMENT A SOUPAPE

(30) Priorität: 20.01.1988 DE 3801569; 20.01.1988 DE 3801561
(43) Veröffentlichungstag der Anmeldung: 07.03.1990
(73) Patentinhaber: Mieth, Hans Otto, Dipl.-Ing., D-21481 Schnakenbek (DE)
(72) Erfinder: MIETH, Hans, Otto, D-2058 Schnakenbek (DE); SCHLOTTERBECK, Erich, D-2053 Schwarzenbek (DE)
(74) Vertreter: Glaeser, Joachim, Dipl.-Ing.
(86) Internationale Anmeldenummer: EP8900044
(87) Internationale Veröffentlichungsnummer: WO8906763

(56) Entgegenhaltungen:
- EP-A- 0 039 319
- EP-A- 0 279 177
- BE-A- 447 878
- CH-A- 519 131
- GB-A- 668 563
- GB-A- 2 064 724
- US-A- 2 583 539
- US-A- 4 605 035

## Beschreibung

Die Erfindung betrifft eine Ventilvorrichtung nach dem Oberbegriff des Anspruchs 1, bei der die beteiligten Sitzdichtungen geschützt und gestützt werden.

Eine Ventilvorrichtung der einleitend gekennzeichneten Gattung, bei der zwei in einem verschiebbaren Schließglied angeordnete Dichtungen in der geöffneten Stellung des Schließgliedes mittels eines Verschlußteiles geschützt und gestützt werden, ist aus der GB-A-668 563 bekannt. Bei einer Ausführungsform dieser bekannten Ventilvorrichtung verfügt das schieberartig ausgebildete Schließglied über zwei seriell angeordnete Dichtungen, die derart in einem Abstand voneinander angeordnet sind, daß in der Schließstellung des Schließgliedes die eine Dichtung mit dem Sitzbereich der Ventilvorrichtung zusammenwirkt und die andere Dichtung mit einem Verschlußteil korrespondiert, welches haubenförmig ausgebildet ist und mit seinem das Schließglied umfassenden Ende an die eine Stirnseite des Sitzbereiches herangeführt ist. In der Offenstellung des Schließgliedes wird letzteres mit seinen beiden Dichtungen vollständig in das Verschlußteil hineingefahren. Durch diese Vorkehrung wird die in der Schließstellung des Schließgliedes mit dem Sitzbereich zusammenwirkende Dichtung auch in der Offenstellung des Schließgliedes in gleicher Weise wie in der Schließstellung, nunmehr allerdings durch das Verschlußteil, geschützt und gestützt. Die andere Dichtung des Schließgliedes verbleibt sowohl in der Schließ- als auch in der Offenstellung des Schließgliedes innerhalb des Verschlußteiles. Obgleich das Schließglied über zwei seriell angeordnete Dichtungen verfügt, ist in der Schließstellung der Ventilvorrichtung nur eine Abdichtung zwischen Schließglied und Sitzbereich gegeben. Die bekannte Ventilvorrichtung verfügt demnach weder über eine doppelte Abdichtung, wie sie bei sogenannten Doppelsitzventilen gegeben ist, noch ist sie in Ermangelung einer doppelten Abdichtung im Sitzbereich dort leckagegesichert und daher dort auch nicht reinigungsfähig.

Aus den nachveröffentlichten Druckschriften DE-A-37 01 027 und EP-A-02 79 177 ist jeweils eine Ventilvorrichtung bekannt, welche mit zwei Abdichtungsstellen ausgestattet ist, die seriell angeordnet sind und in der Schließstellung des Ventils das Überströmen von Fluiden von einem Ventilgehäuseteil in ein anderes verhindern. Bei der aus der letztgenannten Druckschrift bekannten Ventilvorrichtung werden zwei Abdichtungsstellen unter anderem durch eine Dichtungsanordnung mit zwei voneinander getrennten, ventilgehäuseseitig angeordneten Dichtungen realisiert, wobei diese beiden diskreten Dichtungen unter anderem als Dichtungen mit kreisförmigem Querschnitt ausgebildet sind. Der Leckageraum ist bei den beiden bekannten Ventilen zwischen den Abdichtungsstellen angeordnet und über das Ventilgehäuse mit der Umgebung des Ventils verbunden. Mit diesen sogenannten Doppelsitzventilen wird die verfahrenstechnische Aufgabe gelöst, neben der in der Schließstellung des Ventils an sich bekannten Steuerung des Mediumeintritts vom Innenraum des Ventils zum Leckageraum, diesen Eintritt auch in anderen Stellungen des Ventils zu steuern. Die Lösung der verfahrenstechnischen Aufgabe gelingt dadurch, daß der Mediumeintritt vom Innenraum zum Leckageraum in anderen Stellungen als in der Schließstellung des Ventils wirkungsmäßig in gleicher Weise wie in der Schließstellung durch eine das Schließglied hinsichtlich seiner Wechselwirkung mit dem Leckageraum substituierende Vorkehrung gesteuert wird. Hinsichtlich der gegenständlichen Realisierung ist unter anderem ein Verschlußteil vorgesehen, das einen Innendurchgang aufweist und das zu dem Schließglied relativ beweglich in Richtung dessen Bewegungsfreiheitsgrades angeordnet ist. Dabei hat, zumindest in der Offenstellung des Ventils, das Verschlußteil permanent Kontakt mit den beiden Abdichtungsstellen bzw. den beiden Dichtungen.

Das bekannte Verschlußteil ist stets und in allen Anwendungsfällen im Zusammenwirken mit zwei Dichtungen bzw. Abdichtungsstellen zu sehen und es steuert bestimmungsgemäß allein den Mediumeintritt vom Innenraum zum Leckageraum zwischen den beiden Dichtungen bzw. Abdichtungsstellen. Das Verschlußteil übernimmt in anderen Stellungen als in der Schließstellung des Ventils den Schutz und die Stützung der beiden Dichtungen bzw. Abdichtungsstellen, falls diese durch ventilgehäuseseitig angeordnete Dichtungsmittel realisiert werden. Für schließgliedseitig angeordnete Dichtungen bietet das bekannte Verschlußteil in seiner vorgeschlagenen Anordnung und Wirkungsweise keinen Schutz und keine Stützung.

Aufgabe der vorliegenden Erfindung ist es, bei einer Ventilvorrichtung der einleitend gekennzeichneten Gattung eine Leckagesicherung und gegebenenfalls eine Reinigung des für die Leckagesicherung notwendigen Leckageraumes sowohl in der Schließals auch in der Offenstellung der Ventilvorrichtung vorzusehen.

Die Aufgabe wird nach der Erfindung durch die Merkmale des Anspruchs 1 gelöst. Eine vorteilhafte Ausführungsform der Ventilvorrichtung gemäß der Erfindung ist Gegenstand des Anspruchs 2.

Durch die in der GB-A-668 563 vorgeschlagene Ausführungsform der Ventilvorrichtung, bei der eine einzige Sitzdichtung ventilgehäuseseitig angeordnet ist und ein Verschlußteil in der Offenstellung des Schließgliedes diese Sitzdichtung schützt und stützt, ist es möglich, eine Dichtung mit kreisförmigem Querschnitt, einen sogenannten O-Ring, die zwar ein konstruktiv einfaches, insbesondere jedoch bei ventilgehäuseseitiger Anordnung ein nicht unproblematisches Dichtungselement darstellt, begrenzt beweglich in einer gehäuseseitigen Nut anzuordnen, da auch in der Offenstellung des Ventils diese Dichtung durch das Verschlußteil in einer Lage fixiert wird, die ihrer Lage in der Schließstellung des Ventils adäquat ist. Sie wird dadurch auch in der Offenstellung des Ventils der mechanischen Beanspruchung durch das Strömungsmittel entzogen. Bei anderen oftmals üblichen Dichtungsanordnungen liegt die gehäuseseitig angeordnete Dichtung in der Offenstellung des Ventils zum Innenraum des Ventilgehäuses hin vollständig offen. Sie ist Strömungskräften, Korrosion und Erosion des Strömungsmittels, zumindest auf ihrer dem Innenraum des Ventilgehäuses zugewandten Oberfläche, ungeschützt unterworfen.

Ohne besondere Maßnahmen lassen sich lose Dichtungsanordnungen mit bekannten Mitteln nicht befriedigend lösen. Derartige lose Dichtungsanordnungen sind aber aus biologischen und reinigungstechnischen Gründen beispielsweise in den Vereinigten Staaten von Amerika als Standardlösungen zwingend vorgesehen, wobei dort das Problem durch die Hinnahme der vorstehend beschriebenen mechanischen Instabilität der Dichtung oder durch Armierung der Dichtung oder Anordnung in einem Käfig auf bislang allseits unbefriedigende Weise gelöst wird. Die aus der GB-A-668 563 bekannte, letztbeschriebene Ausführungsform löst das bestehende Problem im Zusammenhang mit dem lose angeordneten Dichtungsring mit relativ einfachen Mitteln.

Die vorgeschlagene Erfindung zeigt auf, wie das aus den vorgenannten Druckschriften (DE-A-37 01 027; EP-A-0 279 177) bekannte Wechselwirkungsprinzip zwischen Verschlußteil einerseits und Ventilgehäuse, den beiden ventilgehäuseseitigen Dichtungen bzw. Abdichtungsstellen und dem Leckageraum andererseits nunmehr in Analogie durch ein Wechselwirkungsprinzip zwischen dem Verschlußteil einerseits und dem Schließglied, den schließgliedseitigen Dichtungen und einem zwischen diesen angeordneten Leckageraum andererseits ersetzt wird. Dabei wird zum einen erreicht, daß das Verschlußteil in anderen Stellungen als in der Schließstellung des Ventils die beiden schließgliedseitig angeordneten Dichtungen schützt und stützt, und zum anderen wird der Mediumeintritt vom Innenraum zum Leckageraum in anderen Stellungen als in der Schließstellung des Ventils wirkungsmäßig in gleicher Weise wie in der Schließstellung durch ein das Schließglied hinsichtlich seiner Wechselwirkung mit dem Leckageraum substituierendes Verschlußteil gesteuert.

Die neugeschaffene Ventilvorrichtung vermag sämtliche bekannten Problemstellungen, wie sie ausführlich in den Druckschriften DE-A-37 01 027 und EP-A-0 279 177 dargestellt sind, ebenfalls zu lösen.

Da das vorgeschlagene Wechselwirkungsprinzip zwischen Verschlußteil und Schließglied eine Umschlingung des Schließgliedes durch das Verschlußteil in der Offenstellung der Ventilvorrichtung vorsieht, wird letzteres in dieser Stellung auf oder am Schließglied geführt, wodurch sich geringere Anforderungen an die Führungsqualität bzw. an eine fluchtende Anordnung zwischen Schließgliedachse und Ventilgehäuse ergeben, als dies der Fall wäre, wenn das Schließglied in dieser Stellung in oder am Ventilgehäuse geführt würde.

Die zwei schließgliedseitig angeordneten Dichtungen, zwischen denen der Leckageraum angeordnet ist, der über Leitungen mit der Umgebung der Ventilvorrichtung verbunden ist, lassen sich mit den bekannten Mitteln sowohl in der Schließ- als auch in der Offenstellung der Ventilvorrichtung reinigen.

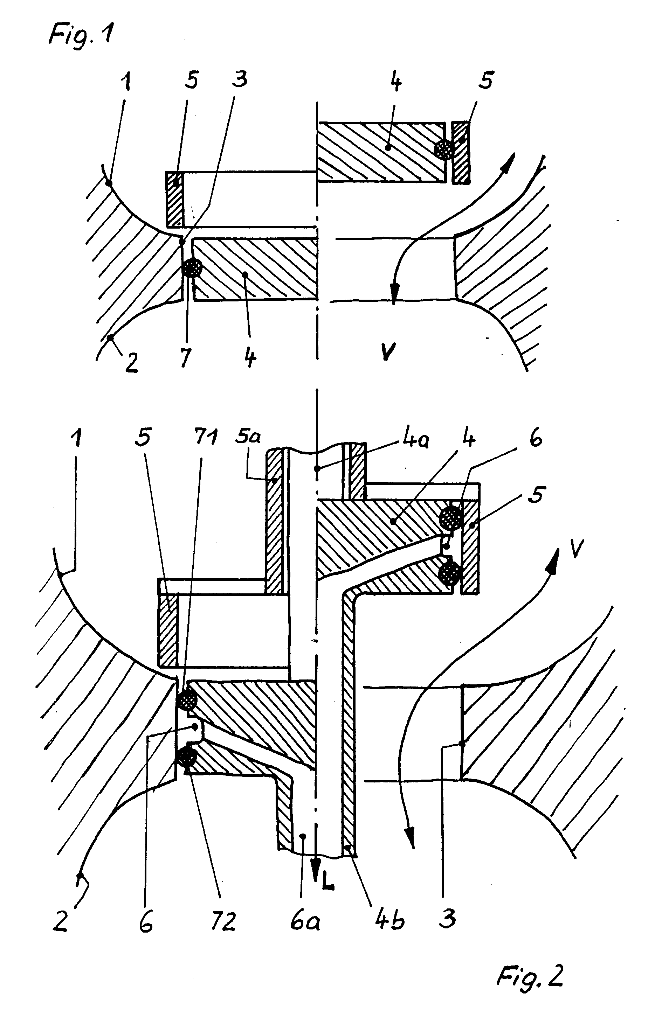

Anhand der nachfolgend kurz erläuterten Figuren der Zeichnung wird der Anmeldungsgegenstand in seinen wesentlichen Merkmalen beispielhaft dargestellt und hinsichtlich seiner Wirkungsweise beschrieben. Es werden folgende Kennzeichen und Bezeichnungen verwendet (s. Liste):
Es zeigen:
**Figur 1** in vereinfachter schematischer Darstellung einen Mittelschnitt durch eine Ventilvorrichtung mit einer einzigen im Schließglied angeordneten Dichtung in der Schließ- und in der Offenstellung (linksseitige bzw. rechtsseitige Darstellung);
**Figur 2** einen Mittelschnitt durch eine Ausführungsform der Ventilvorrichtung gemäß der Erfindung mit zwei schließgliedseitig angeordneten Dichtungen und einem dazwischen angeordneten Leckageraum, ebenfalls in der Schließ- und der Offenstellung;
**Figur 3 und Figur 4** einen Mittelschnitt durch eine Ausführungsform gemäß Figur 1 mit einer begrenzt beweglich angeordneten Dichtung in der Schließ- und in der Offenstellung;
**Figur 5 und Figur 6** einen Mittelschnitt durch eine Ausführungsform gemäß Figur 2 mit einem Reinigungsmittelzulauf zum Leckageraum in der Schließ- und in der Offenstellung des Ventils;
**Figur 7** eine Ausführungsform gemäß Figuren 5 und 6 mit einem abgewandelten Reinigungsmittelzulauf und -ablauf;
**Figuren 8 bis 11** jeweils einen Mittelschnitt durch eine Ventilvorrichtung gemäß den Figuren 5 und 6 mit begrenzt beweglichen Dichtungen und unterschiedlich ausgestaltetem Zulauf für das Reinigungsmittel und Ablauf für das Reinigungsmittel bzw. die Leckage;
Es sei besonders hervorgehoben, daß die in der vorstehenden Kurzbeschreibung aufgelisteten Figuren 1, 3 und 4 von der vorliegenden Erfindung nicht erfaßt sind. Da die Ausgestaltungen gemäß dieser Figuren jedoch zum Verständnis der Erfindung beitragen, sind sie Bestandteil der Beschreibung der vorliegenden Erfindung.

Aus Figur 1 ist das vorgenannte Substitutionsprinzip von einem Verschlußteil 5 und einem Sitzbereich 3 eines Ventilgehäuses 1,2 gegenüber einem Schließglied 4 und dessen einziger Dichtung 7 erkennbar. In der linksseitigen Darstellung ist die Schließstellung der Ventilvorrichtung gezeigt, wobei auf eine Darstellung der Mittel zur Betätigung des Schließgliedes 4 und des Verschlußteiles 5 verzichtet wurde. Der Sitzbereich 3 steht in Wechselwirkung mit dem Schließglied 4 und seiner Dichtung 7. In der Offenstellung der Ventilvorrichtung (rechtsseitige Darstellung) wird die Wirkung des Sitzbereiches 3 in Bezug auf die Dichtung 7 durch das Verschlußteil 5 substituiert. Die in der Schließstellung der Ventilvorrichtung eine Dichtwirkung erzeugte Beanspruchung der Dichtung 7 wird in anderen Stellungen als in der Schließstellung durch das Verschlußteil 5 hervorgerufen. In der Offenstellung der Ventilvorrichtung gelangt eine Durchtrittsströmung V vom Ventilgehäuseteil 1 in das Ventilgehäuseteil 2 oder umgekehrt. Das Verschlußteil 5 weist hinsichtlich seiner das Schließglied 4 aufnehmenden Bohrung die gleiche Abmessung D auf, wie die Verbindungsbohrung der Ventilgehäuseteile 1,2 in ihrem Sitzbereich 3. Bei der schematisch dargestellten Ventilvorrichtung handelt es sich um ein Absperrventil mit Auf/Zu-Funktion.

Das Schließglied 4 der Ausführungsform gemäß Figur 2 unterscheidet sich gegenüber jener gemäß Figur 1 dahingehend, daß nunmehr zwei Dichtungen 71, 72 vorgesehen sind, die einen Leckageraum 6 zwischen sich aufnehmen.

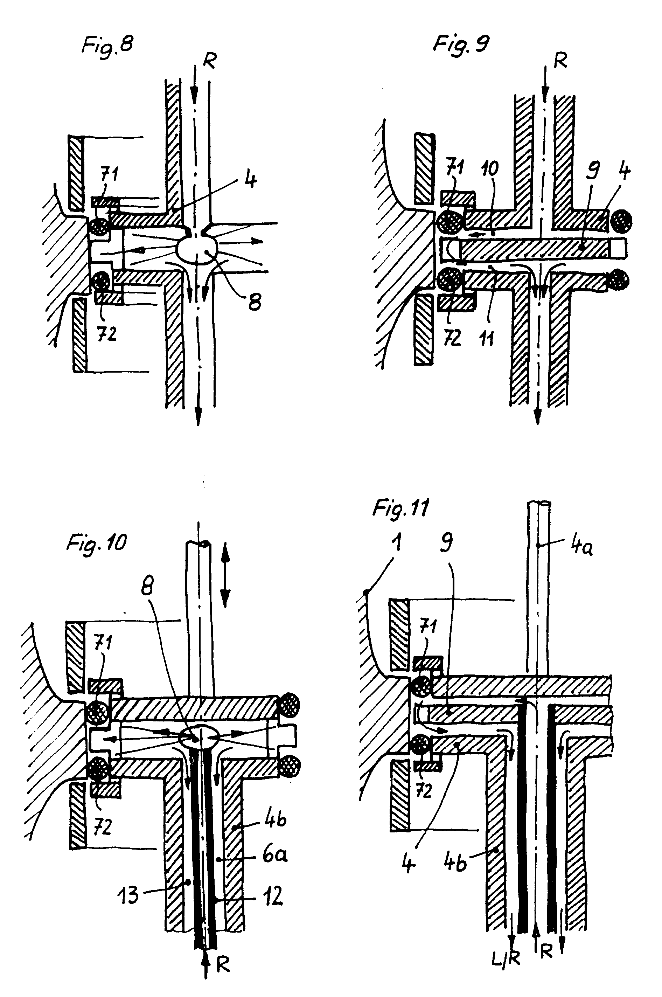

Dieser Leckageraum 6 wird in der Schließstellung der Ventilvorrichtung einerseits von dem Ventilgehäuseteil 1,2 berandet, und er ist andererseits über eine Ablaufbohrung 6a, die innerhalb des Schließgliedes 4 angeordnet ist, mit der Umgebung der Ventilvorrichtung verbunden. Für die Anordnung der Ablaufbohrung 6a innerhalb des Schließgliedes 4 sind eine Reihe von Lösungen bekannt, z. B. kann die Ablaufbohrung 6a in einem Ablaufrohr 4b, das mit dem Schließglied 4 verbunden und aus dem Ventilgehäuseteil 2 herausgeführt ist, angeordnet werden. Ebenso ist die Umkehrung denkbar, indem das Ablaufrohr 4b auf der Seite des Ventilgehäuseteils 1 angeordnet und aus diesem in die Umgebung des Ventils herausgeführt ist. Im letztgenannten Fall befindet sich die Ablaufbohrung 6a dann in einer ersten Stange 4a, mit der das Schließglied 4 betätigt wird. Weitere Ausgestaltungen der Ventilvorrichtung hinsichtlich der Anordnung der Ablaufbohrung 6a ergeben sich auch aus den Figuren 8, 9, 10 und 11 (Ablaufbohrung 6a in einem nach unten herausgeführten Ablaufrohr 4b). Die rechtsseitige Darstellung der Figur 2 zeigt die leckagegesicherte Ventilvorrichtung in ihrer Offenstellung. Der Leckageraum 6 wird nunmehr außenseits von der inneren Mantelfläche des Verschlußteils 5 berandet. Sowohl in der Schließ- als auch in der Offenstellung der Ventilvorrichtung ist der Leckageraum 6 gegenüber dem Innenraum der Ventilgehäuseteile 1 bzw. 2 abgeschlossen. Man erkennt weiterhin, daß das Verschlußteil 5 in Bezug auf die Dichtungen 71 und 72 und in Bezug auf den Leckageraum 6 den Sitzbereich 3 der Ventilgehäuseteile 1 und 2 substituiert. Im Sitzbereich 3 kann ein in Figur 2 nicht dargestellter Sitzring angeordnet werden, der mit den vorstehend genannten gehäuseseitigen Funktionen gleichermaßen ausgestattet ist.

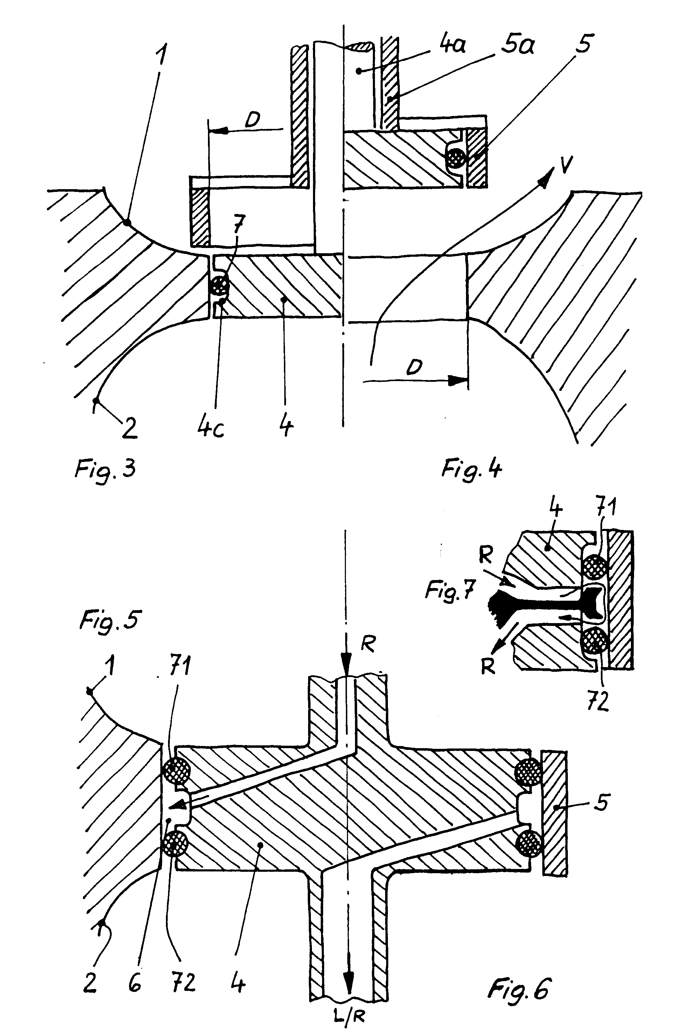

Im Gegensatz zur Ausführungsform gemäß Figur 1 ist bei der Ausführungsform gemäß den Figuren 3 und 4 eine sogenannte "lose" Dichtung 7 vorgesehen, die innerhalb einer Nut 4c des Schließgliedes 4 angeordnet ist. Die Dichtung 7 besitzt innerhalb der Nut 4c in Richtung der Schaltbewegung des Schließgliedes 4 eine begrenzte Beweglichkeit, wodurch die Reinigungsfähigkeit der kritischen Bereiche zwischen Dichtung 7 und Nut 4c erreicht wird. Eine Reinigung dieser Bereiche setzt allerdings voraus, daß das Verschlußteil 5 derart bemessen ist, daß eine räumliche Verbindung zwischen dem Innenraum der Ventilgehäuseteile 1,2 und den die Dichtung 7 umgebenden Wandungen gegeben ist. Mit 4a und 5a sind die erste Stange bzw. die zweite Stange zur Betätigung des Schließgliedes 4 bzw. des Verschlußteils 5 gekennzeichnet.

In den Figur 5, 6 und 7 ist ein Schließglied 4 dargestellt, welches in Übereinstimmung mit der entsprechenden Ausführungsform der Ventilvorrichtung gemäß Figur 2 mit zwei Dichtungen 71 und 72 ausgestattet ist, die zwischen sich einen Leckageraum 6 einschließen. Dieser Leckageraum 6 ist nicht nur, wie in Figur 2 dargestellt, über eine Ablaufbohrung 6a mit der Umgebung der Ventilvorrichtung verbunden, sondern er weist darüber hinaus einen zweiten Verbindungsweg zur Umgebung der Ventilvorrichtung auf, über den Reinigungsflüssigkeit in den Leckageraum 6 eingebracht werden kann. Die vorgenannte Art der Leckage- bzw. Reinigungsmittelabführung (in den Figuren 5 und 6 mit L/R bezeichnet) und die Reinigungsmittelzuführung R sind auch auf eine Dichtungsanordnung gemäß Ausführungsform nach Figur 7 anwendbar, in der die beiden Dichtungen 71 und 72 begrenzt beweglich im Schließglied 4 angeordnet sind. Diesbezügliche Lösungen sind der DE-A-37 01 027 und der EP-A-0 279 177 zu entnehmen. Darüber hinaus zeigen die Figuren 8, 9, 10 und 11 Lösungen auf, wie das Reinigungsmittel in den Leckageraum 6 eingeleitet bzw. diesem zugeführt wird.

Beispielsweise kann das Schließglied 4 als Hohlkörper zwischen den Dichtungen 71 und 72 ausgebildet sein (Figur 8), wobei die Reinigungsflüssigkeit über einer Verteil- und Spritzeinrichtung 8 dem Bereich der Dichtungen 71 und 72 zugeführt wird.

Der Bereich zwischen den Dichtungen 71 und 72 kann auch durch eine Trennwand 9 geteilt sein (Figur 9), die einen Zuführungsbereich 10 und einen Abführungsbereich 11 bildet, so daß das Reinigungsmittel R dem Dichtungsbereich zwangsweise zugeführt und ebenso aus diesem wieder abgeführt wird.

Bei der Ausführungsform gemäß Figur 10 ist ein Reinigungsrohr 12 mit der Verteil- und Spritzeinrichtung 8 in der Ablaufbohrung 6a des Ablaufrohres 4b angeordnet. Die Reinigungsflüssigkeit R wird dem Dichtungsbereich zugeführt und von dort über einen Ringspalt 13, gebildet zwischen der Innenwandung des Ablaufrohres 4b und dem Reinigungsrohr 12, abgeführt.

Die Ausführungsform gemäß Figur 11 entspricht in ihrem wesentlichen Aufbau jener gemäß Figur 9, wobei der Zulauf für die Reinigungsflüssigkeit R und der Ablauf für die Leckage- bzw. Reinigungsflüssigkeit L/R auf einer Seite des Schließgliedes 4 angeordnet sind Der Antrieb des Schließgliedes 4 erfolgt entweder über die erste Stange 4a, die auf der dem Ablaufrohr 4b gegenüberliegenden Seite des Schließgliedes 4 angeordnet und aus dem Ventilgehäuseteil 1 herausgeführt ist oder, bei Verzicht auf die erste Stange 4a, über das Ablaufrohr 4b, wobei die Einbaulage der Ventilvorrichtung, wie in Figur 11 dargestellt, vorliegt oder aber eine um 180° gegenüber der dargestellten Anordnung gewählte Einbaulage.

Bei den in den Figuren 2 und 5 bis 11 dargestellten Ausführungsformen der Ventilvorrichtung gemäß der Erfindung handelt es sich um jeweils ein sogenanntes leckagefrei schaltendes Doppelsitzventil. Falls das Verschlußteil 5 über Stege fest mit dem Ventilgehäuseteil 1 bzw. 2 verbunden ist, so ergibt sich eine Ventilvorrichtung, mit der ein leckagebegrenztes Schalten möglich ist. Die Verbindungsstege zwischen dem Verschlußteil 5 und dem Ventilgehäuseteil 1 bzw. 2 sind dabei mit Durchtrittsöffnungen, die näherungsweise dem Nennquerschnitt des Ventils entsprechen, zu versehen. Wirkungsweise und Funktion dieser Anordnung sind aus den vorgenannten Druckschriften DE-A-37 01 027 und EP-A-0 279 177 bekannt.

### Liste der Bezeichnungen

- 1,2: Ventilgehäuseteil
- 3: Sitzbereich
- 4: Schließglied
- 4a: erste Stange
- 4b: Ablaufrohr
- 4c: Nut
- 5: Verschlußteil
- 5a: zweite Stange
- 6: Leckageraum
- 6a: Ablaufbohrung
- 7: Dichtung
- 71: erste Dichtung
- 72: zweite Dichtung
- 8: Verteil- und Spritzeinrichtung
- 9: Trennwand
- 10: Zuführungsbereich
- 11: Abführungsbereich
- 12: Reinigungsrohr
- 13: Ringspalt
- D: Durchmesser des Sitzbereiches
- L: Leckageabfuhr/Leckage
- R: Reinigungsmittelzufuhr bzw. -abfuhr/Reinigungsmittel
- V: Durchtrittsströmung

## Patentansprüche

1. Ventilvorrichtung mit einem verschiebbaren Schließglied (4) mit einer Dichtung (71), einem hierzu korrespondierenden Sitzbereich am Ventilgehäuse (2) und einem Verschlußteil (5), welches in Richtung des Bewegungsfreiheitsgrades des Schließgliedes verschiebbar ist, wobei die Dichtung (71) in der geöffneten Stellung des Schließgliedes (4) zwischen Verschlußteil (5) und Schließglied (4) so wirksam ist, daß die in der Schließstellung der Ventilvorrichtung erzeugte Beanspruchung der Dichtung (71) in der geöffneten Stellung des Schließgliedes (4) durch das Verschlußteil (5) hervorgerufen wird, und wobei eine weitere Dichtung (72) am Schließglied (4) vorgesehen ist, **dadurch gekennzeichnet,** daß beide Dichtungen (71,72) entweder zwischen dem entweder translatorisch oder rotativ verschiebbaren Schließglied (4) und dem Sitzbereich wirksam sind oder mit dem Verschlußteil (5) so zusammenwirken, daß die in der Schließstellung der Ventilvorrichtung erzeugte Beanspruchung der Dichtungen (71,72) in der geöffneten Stellung des Schließgliedes (4) durch das Verschlußteil (5) hervorgerufen wird, und daß zwischen den beiden Dichtungen (71,72) ein Leckageraum (6) angeordnet ist, der durch mindestens eine im Schließglied (4) angeordnete Leitung (6a) mit der Umgebung der Ventilvorrichtung und gegebenenfalls durch eine zweite Leitung mit einem Reinigungsmittelzulauf verbunden ist.

2. Ventilvorrichtung nach Anspruch 1, **dadurch gekennzeichnet,** daß die Dichtungen (70, 71) in den Richtungen der Schaltbewegung der Ventilvorrichtung eine begrenzte Beweglichkeit aufweisen.

## Claims

1. Valve arrangement containing a slidable shutter (4) with sealing (71), a corresponding seat at the valve housing (2) and a breechblock (5) which is slidable in the direction of the shutter's degree of freedom of movement, with the sealing (71) being effective in the opened position of the shutter (4) between breechblock (5) and shutter (4) in a way that the load of the sealing (71) produced in the closed position of the valve arrangement is caused by the breechblock (5) in the opened position of the shutter (4), and with another sealing (72) being foreseen at the shutter (4), **with the characteristic** that both sealings (71, 72) are either effective between the shutter (4) with translatory or rotary slidability and the seat, or interact with the breechblock (5) in a way that the load of the sealings (71, 72) produced in the closed position of the valve arrangement is caused by the breechblock in the opened position of the shutter (4), and that between both sealings (71, 72), a leakage clearance (6) is positioned, connected to the surrounding of the valve arrangement by at least one line (6a) positioned in the shutter (4), and possibly to a detergent supply by a second line.

2. Valve arrangement according to Claim 1, **with the characteristic** that the sealings (71, 72) present limited mobility in the directions of the switch movement of the valve arrangement.

## Revendications

1. Dispositif de vanne présentant un organe d'obturation (4), mobile, pourvu d'un joint d'étanchéité (71), une zone de siège qui lui correspond sur le carter (2) de la vanne, et une pièce de fermeture (5) qui peut se déplacer dans la direction du degré de liberté de l'organe d'obturation (4), étant entendu que dans la position d'ouverture de l'organe d'obturation (4), le joint d'étanchéité (71) agit entre cet organe d'obturation (4) et la pièce de fermeture (5) de façon que la contrainte à laquelle est soumis ce joint d'étanchéité (71) quand le dispositif de vanne est dans la position de fermeture, soit générée par la pièce de fermeture (5), et étant entendu qu'un autre joint d'étanchéité (72) est prévu sur l'organe d'obturation (4),
caractérisé en ce que
les deux joints d'étanchéité (71, 72) soit agissent, entre l'organe d'obturation mobile en translation ou en rotation et la zone du siège, soit coopèrent avec la pièce de fermeture (5) de telle façon que dans la position d'ouverture de l'organe d'obturation (4) la contrainte à laquelle sont soumis les joints d'étanchéité (71, 72) quand le dispositif de vanne est dans la position de fermeture, soit générée par la pièce de fermeture (5) , et en ce qu'entre les deux joints (71, 72), est disposé un espace de collecte des fuites (6), relié à l'environnement du dispositif de vanne par au moins une conduite (6a) disposée dans l'organe d'obturation (4) et, le cas échéant, par une deuxième conduite comportant une alimentation en produit de nettoyage.

2. Dispositif de vanne suivant la revendication 1, caractérisé en ce que les joints (71, 72) présentent, dans la direction du mouvement d'ouverture du dispositif de vanne, une possibilité de déplacement limitée.
